(19) **Europäisches Patentamt**
**European Patent Office**
**Office européen des brevets**

(11) **EP 3 837 838 B1**

(12) **EUROPEAN PATENT SPECIFICATION**

(45) Date of publication and mention
of the grant of the patent:
**19.06.2024  Bulletin 2024/25**

(21) Application number: **18932920.4**

(22) Date of filing: **05.09.2018**

(51) International Patent Classification (IPC):
**H04N 19/44** *(2014.01)*    **H04N 19/21** *(2014.01)*
**H04N 19/176** *(2014.01)*   **H04N 19/56** *(2014.01)*
**H04N 19/182** *(2014.01)*   **H04N 19/51** *(2014.01)*

(52) Cooperative Patent Classification (CPC):
**H04N 19/44; H04N 19/105; H04N 19/149;**
**H04N 19/176; H04N 19/182; H04N 19/56;**
H04N 19/523

(86) International application number:
**PCT/CN2018/104239**

(87) International publication number:
**WO 2020/047788 (12.03.2020 Gazette 2020/11)**

(54) **CODING IMAGE OF VIDEO SEQUENCE**

CODIERUNG EINES BILDES EINER VIDEOSEQUENZ

CODAGE D'UNE IMAGE D'UNE SÉQUENCE VIDÉO

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**23.06.2021  Bulletin 2021/25**

(73) Proprietor: **HUAWEI TECHNOLOGIES CO., LTD.**
**Shenzhen, Guangdong 518129 (CN)**

(72) Inventors:
• **SETHURAMAN, Sriram**
**Bangalore 560017 (IN)**
• **A, Jeeva Raj**
**Rasipuram, Tamil Nadu 637408 (IN)**
• **KOTECHA, Sagar**
**Karyalaya, Beed, Maharashtra 431126 (IN)**
• **MA, Xiang**
**Shenzhen, Guangdong 518129 (CN)**

(74) Representative: **Grünecker Patent- und**
**Rechtsanwälte**
**PartG mbB**
**Leopoldstraße 4**
**80802 München (DE)**

(56) References cited:
**WO-A1-2017/157281      WO-A1-2018/131982**
**CN-A- 101 415 115        CN-A- 102 215 387**
**CN-A- 102 224 731        US-A1- 2014 212 046**
**US-A1- 2016 301 941**

• **DUEÑAS AND J RIDGE A: "Implementation of**
**enhanced HEVC/H.265 encoderssupporting new**
**requirements and functionalities", IBC 2014**
**CONFERENCE, 11-15 SEPTEMBER 2014,**
**AMSTERDAM,, 11 September 2014 (2014-09-11),**
**XP030082518,**

**Description**

**TECHNICAL FIELD**

The present disclosure relates to the technical field of image coding.

**BACKGROUND**

Video coding (video encoding and decoding) is used in a wide range of digital video applications, for example broadcast digital TV, video transmission over internet and mobile networks, real-time conversational applications such as video chat, video conferencing, DVD and Blu-ray discs, video content acquisition and editing systems, and camcorders of security applications.

In video compression, inter prediction is a process of using reconstructed samples of previously decoded reference pictures by specifying motion vectors relative to a current image block. These motion vectors can be coded as a prediction residual by using spatial or temporal motion vector predictors. The motion vectors can be at sub-pixel accuracy. In order to derive the sub-pixel accurate pixel values in the reference images from the reconstructed integer position values, an interpolation filter is applied. Bi-prediction refers to a process where the prediction for the current image block is derived as a weighted combination of two prediction blocks derived using two motion vectors from two reference picture areas. In this case, in addition to the motion vectors, the reference indices for the reference pictures from which the two prediction blocks are derived also need to be coded. The motion vectors for the current image block can also be derived through a merge process where a spatial neighbor's motion vectors and reference indices are inherited without coding any motion vector residuals. In addition to spatial neighbors, motion vectors of previously coded reference pictures are also stored and used as temporal merge options with appropriate scaling of the motion vectors to take care of the distance to the reference images relative to the distance to the reference pictures for the current image block.

Several methods have been proposed for performing a decoder-side motion vector refinement (DMVR for short) or derivation (DMVD for short) so that the motion vector can be further refined. During both of the DMVR process and the DMVD process, a refinement search needs to be performed around starting points that can be sub-pixel accurate motion vectors, which is usually complex and time-consuming.

This background information is provided to reveal information believed by the applicant to be of possible relevance to the present disclosure. No admission is necessarily intended, nor should be construed, that any of the preceding information constitutes prior art against the present disclosure.

WO2017157281A1 discloses a method and apparatus of video coding using decoder derived motion information based on bilateral matching or template matching.

**SUMMARY**

In view of the above, in order to overcome the above problem, the present disclosure provides a method and an apparatus for coding an image of a video sequence, and a terminal device. The invention is set out in the claims annexed hereto and the scope of protection is defined by the claims.

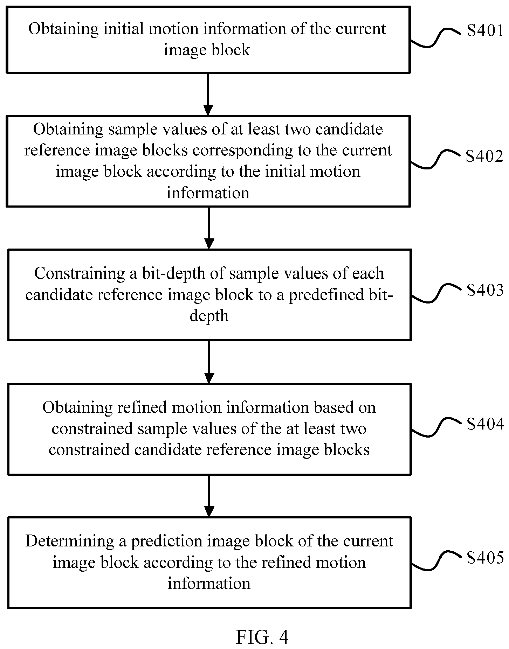

The foregoing and other objects are achieved by the subject matter of the independent claims. Further implementation forms are apparent from the dependent claims, the description and the figures. Enabling disclosure for the protected invention is provided with the embodiments described in relation to figure 4. The other figures, aspects, and embodiments are provided for illustrative purposes and do not represent embodiments of the invention unless when combined with all of the features respectively defined in the independent claims.

With the present invention, the bit-depth of sample values of each candidate reference image block is constrained before the refining of the motion information, thus rendering the computing complexity lower and allowing for less processing time.

**BRIEF DESCRIPTION OF DRAWINGS**

The accompanying drawings are used to provide a further understanding of the present disclosure, constitute a part of the specification, and are used to explain the present disclosure together with the following specific embodiments, but should not be construed as limiting the present disclosure. In the drawings,

FIG. 1 is a schematic view of template matching (TM) based decoder side motion vector derivation (DMVD);
FIG. 2 is a schematic view of a bilateral matching (BM) based DMVD;
FIG. 3 is a schematic view of bilateral template matching based decoder side motion vector refinement (DMVR);

FIG. 4 is a schematic flowchart of a method for coding an image of a video sequence according to an embodiment of the present disclosure;

FIG. 5 is a schematic flowchart of a method for coding an image of a video sequence according to an embodiment of the present disclosure; and

FIG. 6 is a structural view of an apparatus for coding an image of a video sequence according to an embodiment of the present disclosure.

## DESCRIPTION OF EMBODIMENTS

In the following description, reference is made to the accompanying figures, which form part of the disclosure, and which show, by way of illustration, specific aspects of embodiments of the present disclosure or specific aspects in which embodiments of the present disclosure may be used. It is understood that embodiments of the present disclosure may be used in other aspects and comprise structural or logical changes not depicted in the figures. The following detailed description, therefore, is not to be taken in a limiting sense, and the scope of the present disclosure is defined by the appended claims.

For instance, it is understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

Video coding typically refers to the processing of a sequence of pictures, which form the video or video sequence. Instead of the term "picture" the term "frame" or "image" may be used as synonyms in the field of video coding. Video coding used in the present disclosure (or present disclosure) indicates either video encoding or video decoding. Video encoding is performed at the source side, typically comprising processing (e.g. by compression) the original video pictures to reduce the amount of data required for representing the video pictures (for more efficient storage and/or transmission). Video decoding is performed at the destination side and typically comprises the inverse processing compared to the encoder to reconstruct the video pictures. Embodiments referring to "coding" of video pictures (or pictures in general, as will be explained later) shall be understood to relate to either "encoding" or "decoding" for video sequence. The combination of the encoding part and the decoding part is also referred to as CODEC (Encoding and Decoding).

In case of lossless video coding, the original video pictures can be reconstructed, i.e. the reconstructed video pictures have the same quality as the original video pictures (assuming no transmission loss or other data loss during storage or transmission). In case of lossy video coding, further compression, e.g. by quantization, is performed, to reduce the amount of data representing the video pictures, which cannot be completely reconstructed at the decoder, i.e. the quality of the reconstructed video pictures is lower or worse compared to the quality of the original video pictures.

Several video coding standards since H.261 belong to the group of "lossy hybrid video codecs" (i.e. combine spatial and temporal prediction in the sample domain and 2D transform coding for applying quantization in the transform domain). Each picture of a video sequence is typically partitioned into a set of non-overlapping blocks and the coding is typically performed on a block level. In other words, at the encoder the video is typically processed, i.e. encoded, on a block (video block) level, e.g. by using spatial (intra picture) prediction and temporal (inter picture) prediction to generate a prediction block, subtracting the prediction block from the current block (block currently processed/to be processed) to obtain a residual block, transforming the residual block and quantizing the residual block in the transform domain to reduce the amount of data to be transmitted (compression), whereas at the decoder the inverse processing compared to the encoder is partially applied to the encoded or compressed block to reconstruct the current block for representation. Furthermore, the encoder duplicates the decoder processing loop such that both will generate identical predictions (e.g. intra- and inter predictions) and/or re-constructions for processing, i.e. coding, the subsequent blocks.

As used herein, the term "block" may a portion of a picture or a frame. For convenience of description, embodiments of the present disclosure are described herein in reference to High-Efficiency Video Coding (HEVC) or the reference software of Versatile video coding (VVC), developed by the Joint Collaboration Team on Video Coding (JCT-VC) of ITU-T Video Coding Experts Group (VCEG) and ISO/IEC Motion Picture Experts Group (MPEG). One of ordinary skill in the art will understand that embodiments of the present disclosure are not limited to HEVC or WC. It may refer to a CU, PU, and TU. In HEVC, a CTU is split into CUs by using a quad-tree structure denoted as coding tree. The decision whether to code a picture area using inter-picture (temporal) or intra-picture (spatial) prediction is made at the CU level. Each CU can be further split into one, two or four PUs according to the PU splitting type. Inside one PU, the same prediction process is applied and the relevant information is transmitted to the decoder on a PU basis. After obtaining the residual block by applying the prediction process based on the PU splitting type, a CU can be partitioned into transform units (TUs) according to another quadtree structure similar to the coding tree for the CU. In the newest development of the video compression technical, Qual-tree and binary tree (QTBT) partitioning frame is used to partition a coding block. In the QTBT block structure, a CU can have either a square or rectangular shape. For example, a coding tree unit (CTU) is first partitioned by a quadtree structure. The quadtree leaf nodes are further partitioned by a binary tree structure. The binary tree leaf nodes are called coding units (CUs), and that segmentation is used for prediction and transform processing without any further partitioning. This means that the CU, PU and TU have the same block size in the QTBT coding block structure. In parallel, multiply partition, for example, triple tree partition was also proposed to be used together with the QTBT block structure.

For the sake of clarity, several terms involved in the present disclosure will be explained in the first place.

The term "coding" in the present disclosure may refer to either encoding or decoding, which is not limited in any one of the embodiments of the present disclosure unless otherwise specified.

The term "current image block" in the present disclosure represents an image block currently under processing, for example, during the encoding process, the current image block may be the image block currently being encoded, while during the decoding process, the current image block may be the image block currently being decoded.

The term "reference image block" in the present disclosure represents an image block which provides reference information for the current image block, during a searching process, a best matching reference image block needs to be found among multiple reference image blocks through traversal operations.

The term "current image" in the present disclosure refers to an image where the current image block is located. Correspondingly, the term "reference image" in the present disclosure refers to an image where the reference image block is located.

The term "prediction image block" in the present disclosure represents an image block which provides predictions to the current image block. For example, a best matching reference image block may be found among the multiple reference image blocks, and this best matching reference image block may serve as the prediction image block of the current image block.

The term "motion vector (MV)" in the present disclosure represents a position offset of a reference image block relative to a current image block.

The "motion information" of an image block in the present disclosure represents information about the movement of the image block, in some embodiments, the motion information may include two kinds of information such as indication of a reference image and a motion vector of a reference image block in said reference image; in some embodiments, the motion information may only include the motion vector of said reference image block. The contents of the motion information are not limited in the present disclosure and may change along with specific application scenarios.

The term "sample value" of an image block refers to the pixel value at a sample point of the image block.

A terminal device may be any one of the following devices: a smartphone, a mobile phone, a cellular phone, a cordless phone, a session initiation protocol (SIP) phone, a wireless local loop (WLL) station, a personal digital assistant (PDA), a handheld device capable of wireless communication, an on-board equipment, a wearable device, a computing device or other processing devices connecting to a wireless modem.

As can be seen from the above description, the motion information needs to be encoded and transmitted to the decoder side. There are two main techniques for MV encoding, including the merge technique and the advanced motion vector prediction (AMVP). The principles of these two techniques are as same as those in prior art, thus will not be illustrated in detail herein.

Further, several methods have been proposed for performing a DMVD process or a DMVR process so that the motion vector residual coding bits can be further reduced.

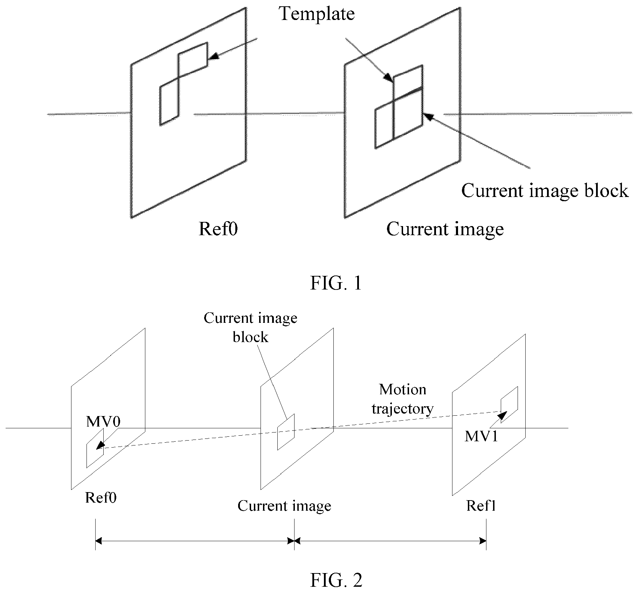

One class of methods, called template matching (TM) methods, using an L-shaped region adjacent the current block (as shown in FIG. 1) that has already been reconstructed, called as the template, and identifying a best matching L-shaped region, using cost functions such as sum of absolute differences (SAD) or mean-removed sum of absolute differences (MR-SAD), in each reference image (denoted as Ref0 in FIG. 1) using a plurality of suitably scaled spatial and temporal motion vector candidates. Then, centered on the best matching candidate, further refinement is performed within a certain refinement distance around that center. On the encoder side, rate distortion optimized cost is computed to decide between uni-prediction (i.e. prediction using the best matching reference) and bi-prediction (i.e. prediction derived by averaging the top two best matching references).

Another class of methods, called BM methods. As shown in FIG. 2, the motion information of a current CU is derived by finding the closest match between two blocks along the motion trajectory of the current CU in two different reference images (denoted as Ref0 and Ref1 in FIG. 2). Under the assumption of continuous motion trajectory, the motion vectors MV0 and MV1 respectively pointing to the two reference blocks Ref0 and Ref1 shall be proportional to the temporal distances, i.e., TD0 and TD1, between the current image and the two reference images. When the current image is temporally between the two reference images and the temporal distance from the current image to the two reference images is the same, the bilateral matching becomes mirror based bi-directional MV.

In the BM merge mode, bi-prediction is always applied since the motion information of a CU is derived based on the closest match between two blocks along the motion trajectory of the current CU in two different reference images.

In some embodiments, the temporal distances are ignored and bilateral matching is performed with equal and opposite motion vectors in the past and future reference images respectively.

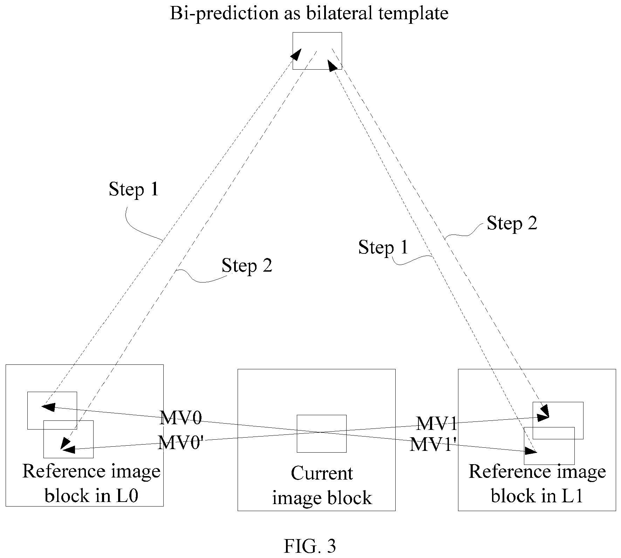

In a variant of bilateral matching mode, that is, the aforementioned DMVR method, as shown in FIG. 3, a bilaterally averaged template is first created using the prediction blocks referred by the initial MV0 and MV1 (denoted as Step 1 in FIG. 3) in the first candidate reference image block list L0 and the second initial candidate reference image block list L1 obtained from explicitly signaled merge index and BM is performed against this template to find the best matched blocks referred by the updated MV0' and MV1' (denoted as Step 2 in FIG. 3). The template is updated if there is any movement. Also, in some embodiments, the refinement is performed in one reference and the motion vector in the other reference is obtained through mirroring of this refined motion vector. The refinement alternates between the two references till either the center position has the least error or the maximum number of iterations is reached.

In some of the methods of refinement, a CU level refinement is first performed. Then a sub-CU level multi-candidate evaluation is performed along with the CU-level refined MVs as candidates. Optionally, each sub-CU can perform its own refinement with respect to the best matching candidate.

In a default merge mode, no DMVD is required, while in an explicit merge mode, the merge mode (whether TM merge or BM merge) may be signaled. In some embodiments, no merge index is signaled while in other embodiments, to simplify the decoder complexity of performing multiple motion compensations, an explicit merge index is signaled.

Given the implicit DMVD or DMVR process, the encoder needs to perform these steps in exactly the same manner as the decoder in order for the encoder-side reconstruction to match with the decoder-side reconstruction.

In fact, the DMVD requires no merge index while the DMVR requires a merge index to obtain the initial motion information of the current image block.

Whenever an explicit merge index is signaled, the DMVR starts from the motion vectors and reference indices normatively deduced from the signaled merge index. When an explicit merge-mode index is not signaled, that is the DMVD case, a set of initial motion vector candidates are evaluated at the decoder using a cost function and the candidate with the lowest cost is chosen as the starting point for refinement. Thus, irrespective of whether the DMVD method is based on TM or based on BM through difference minimization between equal and oppositely displaced blocks in a first candidate reference image block list L0 and a second candidate reference image block list L1 (commonly referred to as BM cost) or based on the difference between an averaged version of the corresponding patches in the first candidate reference image block list L0 and the second candidate reference image block list L1 and a displacement in L0/L1 (commonly referred to as DMVR cost), there is a refinement search that needs to be performed around the starting point that may be sub-pixel accurate motion vectors.

In order to evaluate the cost function, sometimes an interpolation needs to be performed to derive the sample values at the sub-pixel accurate centers based on the sample values of the reference images at the integer positions. The interpolating filter can be as simple as a bilinear interpolation filter or can be a longer filter such as the 2-D DCT-based separable interpolation filters. In order to reduce the complexity of deriving the candidate reference image block for a current image block again and again at each position considered during the refinement, an integer-pixel distance grid of refinement points centered at the sub-pixel accurate position(s) in the first candidate reference image block list L0 and/or the second candidate reference image block list L1 had been proposed in another invention. With this, only incremental interpolations need to be performed as a new position close to a current best cost position is considered. After the refinement of integer-pixel distance grid is completed, best integer delta MVs are obtained with respect to the merge MVs.

In order to improve the compression gains further, sub-pixel distance refinement can be performed. A half pixel distance refinement requires the candidate reference image blocks at half pixel distance from the best integer distance MV position(s) in the reference image(s). It is possible to perform the sub-pixel accurate refinement using BM cost or DMVR cost. As we go to quarter-pixel distance and lower sub-pixel accuracies, the interpolation filter required at each position is different as the sub-pixel position phases do not align. In another application, using the costs evaluated at integer distance positions centered on the position with the least cost, a parametric error surface is fitted and the sub-pixel accurate displacements with the least cost is computed.

However, there may still be complexity and time-consuming issues with the above process. It is known that the bit depths of the reference image typically range from 8 bits to 12 bits. Thus, during the integer distance refinement iterations described above and the evaluations of cost to compute the parameters of an error surface, the candidate reference image blocks of L0 and L1 are maintained in buffers. The total storage requirement for these buffers will depend on the bit depths of the candidate reference image blocks. In software, for instance, a 10-bit value occupies 16-bits of storage to avoid unnecessary packing (into supported data types) and corresponding unpacking operations. Also, the cost calculations for refinement are typically performed using SAD or a variant of it such as MR-SAD where the sum of absolute differences are computed after adjusting for the mean difference between the two blocks (at a sample level). The complexity of the cost calculation and the vector operation (single instruction multiple data (SIMD)) throughput will depend on the bit depths of the candidate reference image blocks. For instance, in software, 8-bit SADs can be performed in nearly half as many cycles as it takes to perform 9-16-bit SADs. Also, many smartphone chipsets contain hardware engines for encoding as well as decoding. As part of encoder hardware engines, they tend to have 8-bit SAD calculation building blocks.

Hence, aiming the above problem, the present disclosure provides a method for coding an image of a video sequence, where the bit-depths of the candidate reference image blocks are constrained, thereby allowing for a lower buffer size requirement as well as a lower gate count in hardware or a higher throughput for the cost evaluations, without impacting the bit-rate savings coming from decoder side motion vector refinement. The present disclosure provides a normative method (that is employed at both of the encoder side and decoder side) which constrains the bit depth of the candidate reference image blocks that are used in the cost function evaluations to a predefined bit-depth.

Embodiments of the present disclosure will be elaborated in detail as follows.

FIG. 4 is a schematic flowchart of a method for coding an image of a video sequence according to an embodiment of the present disclosure, where the image includes a current image block. This method can be implemented by an apparatus for an image of a video sequence at an encoder side or a decoder side. Besides, the method may be combined with the DMVD or the DMVR process, or any other processes for refining the motion information of a current image block, which is not limited herein.

The method includes the following steps:

S401: obtaining initial motion information of the current image block.

First of all, the initial motion information of the current image block is obtained so as to determine the candidate reference image blocks corresponding to the current image block.

In a DMVD process, as mentioned above, since there is no merge index, therefore, a merge candidate list may be constructed based on motion information of adjacent blocks of the current image block. Then, a first cost function may be used to determine motion information with the least cost from the merge candidate list as the initial motion information. Here the merge candidate list may be constructed using existing methods, which will not be illustrated in detail herein. The first cost function may be one of the following: a SAD, a MR-SAD or a sum of squared differences (SSD).

In a DMVR process, as mentioned above, a merge index indicating the best motion information in the merge candidate list is available. Therefore, in this case, motion information identified by the merge index may be determined from the merge candidate list as the initial motion information, where the merge candidate list may be constructed using existing methods, as same as in the DMVD process.

S402: obtaining sample values of at least two candidate reference image blocks corresponding to the current image block according to the initial motion information.

After obtaining the initial motion information of the current image block, at least two candidate reference image blocks are obtained according to the initial motion information, where the candidate reference image blocks serve as candidates for selection.

In fact, before obtaining sample values of at least two candidate reference image blocks corresponding to the current image block, the positions of the at least two candidate reference image blocks should be determined in the first place. As mentioned above, the candidate reference image blocks are located in a reference image, so the reference image needs to be identified at first.

In one possible implementation, the initial motion information includes an initial motion vector of the current image block and indication of a reference image, so that the reference image may be determined based on the indication, in some embodiments, the indication may be the index of the reference image. In another possible implementation, the initial motion information includes an initial motion vector of the current image block, the reference image may be a predefined image or based on a predefined algorithm, that is, an algorithm known to both of the encoder side and the decoder side to determine the reference image, for example, taking the image located most adjacent to the current image as the reference image.

In an embodiment, positions of the at least two candidate reference image blocks may be determined according to the initial motion information and a position of the current image block. For example, an initial candidate reference image block may be determined based on the initial motion vector and the position of the current image block as a starting point. Then, based on a search step, which may be predefined according to actual requirements and may be sub-pixel accurate, the positions of the candidate reference image blocks may be determined. For example, if the search step equals to 1, then the candidate reference image blocks may be obtained by moving the initial candidate reference image block towards different directions by one pixel distance. The at least two candidate reference image blocks may be obtained through iteratively moving in accordance with the search step. Also, a search range may be predefined, therefore, the reference image blocks within the predefined search range may be determined as said candidate reference image blocks.

Then, after determining the position of each candidate reference image block, the sample values of these candidate reference image blocks may be further determined based thereon. It is possible that only the sample values at the integer-pixel positions of the reference image are known. Regarding each candidate reference image block, if the sample values of the candidate reference image block are available, which means that the sample values of this candidate reference image block can be obtained from the sample values of the reference image, this may be a possible case when sample points of said candidate reference image block are located on the integer-pixel positions of the reference image, so the sample values of the candidate reference image block may be obtained simply by copying the sample values of the reference image. Otherwise, i.e., if the sample values of the candidate reference image block are unavailable, in order to obtain the sample values of the candidate reference image block, an interpolation operation may be performed to determine these unavailable sample values. The interpolation operation may be done using any existing methods and will not be described in detail herein. For example, given the position of the current image block, a bilinear interpolation may be performed to obtain the sample values at the integer distance positions within the predefined search range.

S403: constraining a bit-depth of sample values of each candidate reference image block to a predefined bit-depth.

As described above, since the bit-depths of the candidate reference image blocks may affect the overall processing speed and complexity, therefore, before performing the refinement of the motion information, it would be better to constrain the bit-depth of sample values of each candidate reference image block.

It should be noted that, for each candidate reference image block, the bit-depths of the sample values are the same, and the bit-depth of the reference image, i.e., where the candidate reference image blocks are located, may also be the bit-depth of the sample values of the each candidate reference image block. Therefore, the constraining of the bit-depth of sample values of each candidate reference image block to the predefined bit-depth means to constrain the bit-depth of each sample value of each candidate reference image block to the predefined bit-depth.

In an embodiment, the constraining may be realized by performing a right shift by an amount of (b-d) on the bit-depth of sample values of each candidate reference image block, where b is the bit-depth of the sample values of the candidate reference image block, d is the predefined bit-depth, and b is greater than d. Those skilled in the art will know that the value of d can be chosen according to actual requirements.

Suppose the interpolation typically performs the following operation to derive the sample value after a Q-format adjustment arising from an interpolation filter's weights,

$$L = (\hat{L} + (1 \ll (Q - 1))) \gg Q \qquad (1)$$

Where $\hat{L}$ is a non-normalized sample value of the candidate reference image block, $L$ is a normalized sample value of the candidate reference image block, $Q$ is a normalization factor of the interpolation filter.

Let $b$ be the bit-depth of the sample values of the first candidate reference image block and $d$ be the predefined bit-depth (less than $b$), then the bit-depth constrained sample value is derived as follows:

$$L' = L \gg (b - d) \qquad (2)$$

Where $L'$ is a constrained sample value of the candidate reference image block. Any right shift required by the interpolation process (from an increased internal bit-depth required during the 2-D interpolation) can be combined with this right shift.

According to the present invention, the process of bit-depth constraining is combined as,

$$L' = (\hat{L} + (1 \ll (Q - 1))) \gg (Q + b - d) \qquad (3)$$

The rest of the steps of the normative motion vector refinement process is performed using these constrained bit-depth samples to obtain the refined motion vectors using which the normative motion compensated prediction and coding of the prediction residuals are performed.

For example, if $b$ is 10 bits and $d$ is 8 bits, then after constraining the bit-depth to 8-bits, the buffer size for 10-bit data reduces by 2x when 10-bit is stored in 16-bit data-types. Even otherwise, the buffer size requirement comes down by 20%. By using byte-wise SIMD operations on software platforms, the cycle count for evaluating cost functions can be halved. On hardware platforms, the cost evaluation operation can use 20% less bit planes, which results in reduced gate count and area.

S404: obtaining refined motion information based on constrained sample values of the at least two constrained candidate reference image blocks.

After the constraining operation in S403, the refined motion information is obtained based on the constrained sample values of the at least two constrained candidate reference image blocks, here the term "constrained candidate reference image block" refers to the candidate reference image block with constrained sample values.

In an embodiment, a second cost function may be used to determine a position of a constrained candidate reference image block with the least cost, and then the refined motion information may be obtained according to the position of the constrained candidate reference image block. The second cost function is one of a SAD, a MR-SAD or a SSD.

In a TM based DMVD process, the second cost function may indicate a difference between a template of a constrained candidate reference image block (the L-shaped region of Ref0 shown in FIG. 1) and a template of the current image block (the L-shaped region of the current image shown in FIG. 1). Here the template actually serves as comparison references.

In a BM based DMVD process, there is no template, the second cost function may indicate a difference between two candidate reference image blocks.

Regarding the DMVR case, detailed description may be made in the following part.

As described in S402, in the case where the initial motion information includes both of the initial MV and the indication of the reference image, the refined motion information may also include a refined MV and the indication of the reference image.

S405: determining a prediction image block of the current image block according to the refined motion information.

As long as the refined motion information is obtained, with a determined reference image, the prediction image block of the current image block is determined.

In an embodiment, the initial motion information includes an initial motion vector of the current image block, in this case, the refined motion information also include a refined motion vector of the current image block. As already described in S402, the reference image may be a reference image predefined or obtained based on a predefined algorithm, therefore, the prediction image block of the current image block may be determined according to the refined motion vector and the reference image.

In another embodiment, the initial motion information includes an initial motion vector and indication of a reference image, in this case, the refined motion information also include a refined motion vector of the current image block and the indication of the reference image, thus the prediction image block of the current image block may be determined according to the refined motion vector and the indication of the reference image.

It should be noted that although the terms herein are expressed herein using singular forms, those skilled in the art would know, without any creative effort, that if the method is combined with a refining process where several reference images are used for prediction, then the corresponding terms may represent a plurality of elements, for example, if the method is combined with a BM based refining process, the initial vector may include two initial MVs, there may be two reference images.

The present disclosure provides a method for coding an image of a video sequence, where initial motion information of the current image block is obtained, sample values of at least two candidate reference image blocks corresponding to the current image block are obtained according to the initial motion information, a bit-depth of sample values of each candidate reference image block is constrained to a predefined bit-depth, then refined motion information is obtained based on sample values of the at least two constrained candidate reference image blocks, and a prediction image block of the current image block is determined according to the refined motion information. Since the bit-depth of sample values of each candidate reference image block is constrained before the refining of the motion information, thus rendering the computing complexity lower and allowing for less processing time.

In order to elaborate the method of the present disclosure more clearly, in the following, taking the BM based DMVR process as an example, the method will be described more detailedly in combination with the BM based DMVR process.

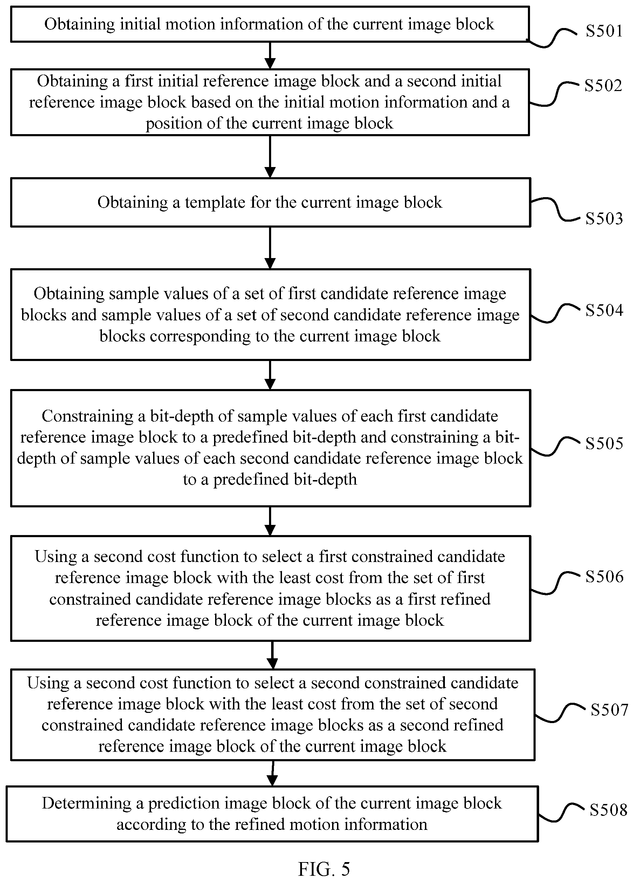

FIG. 5 is a schematic flowchart of a method for coding an image of a video sequence according to an embodiment of the present disclosure. This method includes the following steps:

S501: obtaining initial motion information of the current image block.

Reference may be made to the description in S401.

Further, in this embodiment, the initial motion information includes first initial motion vector and second initial motion vector, and indications of two reference image. The two reference images include a first reference image corresponding to the first initial motion vector and a second reference image corresponding to the second initial motion vector.

S502: obtaining a first initial reference image block and a second initial reference image block based on the initial motion information and a position of the current image block.

For example, the first and second reference images may be obtained based on the indications, which may be respective indexes of the two reference images. Then, the first initial reference image block may be obtained according to the first initial motion vector and the position of the current image block, in a similar way, the second initial reference image block may be obtained according to the second initial motion vector and the position of the current image block.

S503: obtaining a template for the current image block.

For example, the template may be a weighted combination of the first initial reference image block and the second initial reference image block. Here the weights may be chosen according to actual requirements, which will not be limited herein.

This step is optional, since the later cost evaluation with a cost function may be calculated directed based on reference image blocks rather than using the template.

S504: obtaining sample values of a set of first candidate reference image blocks and sample values of a set of second candidate reference image blocks corresponding to the current image block.

The first candidate reference image block may be located in a reference image in a list L0, and may also be referred to as a forward candidate reference image block. The second candidate reference image block be located in a reference image in a list L1, and may also be referred to as a backward candidate reference image block.

For both of the first candidate reference image blocks and the second candidate reference image blocks, reference may be made to the description in S402 to obtain sample values thereof.

An example will be briefly described to shown how to implement the interpolation.

Provided that the position of the current image block is (x, y), with a dimension of W*H, where W is the width of the current image block and H is the height of the current image block. The first reference image is denoted as L0 and the second reference image is denoted as L1. The first initial motion vector and the second initial motion vector are respectively denoted as MV0 and MV1, where MV0 and MV1 are sub-pixel accurate motion vectors.

First, sub-pixel offsets FMV0 and FMV1, and integer parts IMV0 and IMV1 may be derived from the first and the second initial motion vector. FMV0 and FMV1 are respective fractional parts of the first and second initial motion vectors, while IMV0 and IMV1 are respective integer parts of the first and second initial motion vectors.

Then for each integer distance pixel position required in the search range in the two reference images L0 and L1, the interpolation operation may be performed using the sub-pixel phases.

S505: constraining a bit-depth of sample values of each first candidate reference image block to a predefined bit-depth and constraining a bit-depth of sample values of each second candidate reference image block to a predefined bit-depth.

For example, in this embodiment, the bit-depth of each first candidate reference image block may be constrained to a desired bit-depth by performing a right shift (with or without rounding) by the amount equal to the difference between the bit-depth of the first reference image and a desired bit-depth. Similar operations may be performed for constraining the bit-depth of each second candidate reference image block.

Notably, the sample values of the first and second candidate reference image blocks may be constrained simultaneously or in an arbitrary order, which is not limited herein.

S506: using a second cost function to determine a first position of a first constrained candidate reference image block with the least cost.

For example, the second cost function may be used to determine the first position of the first refined motion vector, where the second cost function indicates a difference between a first constrained candidate reference image block and a template of the current image block, where a bit-depth of sample values of the template is also constrained to the predefined bit-depth.

Therefore, the differences between the template and each first constrained candidate reference image block may be calculated and the first position of the first constrained reference image block with the smallest difference may be determined.

Here the cost may be calculated as follows:

$$\text{cost} = \sum_{i=0}^{H-1}\sum_{j=0}^{W-1}|(I0(i,j) - MIN((1 \ll d) - 1, (I1(i,j) + (m0 - m1))))|, \text{ if } \boldsymbol{m0 > m1}$$

$$\text{cost} = \sum_{i=0}^{H-1}\sum_{j=0}^{W-1}|(MIN((1 \ll d) - 1, (I0(i,j) + (m1 - m0))) - I1(i,j))|, \text{ otherwise}$$

$$(4)$$

Where **H** is a height of the current image block, **W** is a width of the current image block, **I0(i, j)** is a sample value at a position (i, j) of a first constrained candidate reference image block, **I1(i, j)** is a sample value at the position (i, j) of the template, m0 is a mean of sample values of the first constrained candidate reference image block, **m1** is a mean of sample values of the template, d is the predefined bit-depth.

The above equation aims to limit the variables therein do not exceed the maximum value that can be expressed with d bits. The above equation specifies a normative process through which the final absolute difference can be performed between two quantities at the predefined bit-depth, thereby avoiding possible overflowing errors.

S507: using a second cost function to determine a second position of a second constrained candidate reference image block

Similarly, the differences between the template and each second constrained candidate reference image block may be calculated and a second constrained reference image block with the smallest difference may be selected from the set of second constrained candidate reference image blocks. Here the cost may also be calculated in a similar way as in S506.

Notably, S506 and S507 may be executed simultaneously or in an arbitrary order, which is not limited herein.

S508: determining a prediction image block of the current image block according to the refined motion information.

For example, the refined motion information may be obtained according to a first position of the first constrained reference image block and a second position of the second constrained reference image block.

Besides, as described above, S503 may be an optional step. In fact, in the above example, the cost is calculated based on a template, which is actually the aforementioned DMVR cost.

It is also possible to evaluate the BM cost instead of the DMVR cost. In this case, S503 will be omitted. And in S507 and S508, since the second cost function indicates a difference between a first constrained candidate reference image block and a second constrained candidate reference image block, therefore, the cost may be calculated as:

$$\text{cost} = \sum_{i=0}^{H-1}\sum_{j=0}^{W-1}|(I0(i,j) - MIN((1 \ll d) - 1, (I1(i,j) + (m0 - m1))))|, \text{ if } m0 > m1$$

$$\text{cost} = \sum_{i=0}^{H-1}\sum_{j=0}^{W-1}|(MIN((1 \ll d) - 1, (I0(i,j) + (m1 - m0))) - I1(i,j))|, \text{ otherwise}$$

$$(5)$$

Where H is a height of the current image block, $W$ is a width of the current image block, $I0(i, j)$ is a sample value at a position (i, j) of a first constrained candidate reference image block, $I1(i, j)$ is a sample value at the position (i, j) of a second constrained candidate reference image block corresponding to the first constrained candidate reference image block, $m0$ is a mean of sample values of the first constrained candidate reference image block, $m1$ is a mean of sample values of the second constrained candidate reference image block, b is the bit-depth of the sample values of the first and second candidate reference image block, d is the predefined bit-depth and b is greater than d. Those skilled in the art will know that the value of d can be chosen according to actual requirements.

The above equation aims to limit the variables therein do not exceed the maximum value that can be expressed with d bits. It can be seen that the above equation actually aims to limit the value of the ($I0(i,j)$ - $MIN((1 \ll d)$ - 1, ($I1(i,j)$ + ($m0$ - $m1$)) in case of $m0 > m1$, or otherwise ($m1$ - $m0$))) - $I1(i,j)$. In fact, this serves to prevent its value from overflowing when being stored in a buffer.

The above equation specifies a normative process through which the final absolute difference can be performed between two quantities at the predefined bit-depth, thereby avoiding possible overflowing errors.

Even after constraining the bit-depth of each candidate reference image block to the predefined bit-depth d as in the embodiment shown in FIG. 4, the value on which absolute is performed can exceed d when MR-SAD is employed. This will require 1-bit extra in hardware implementations, but can have a 2x throughput impact in software SIMD (e.g. 9-bit absolute difference will have half the throughput as with 8-bit absolute difference). Also, given that the entire process is normative, the bit-depth in MR-SAD case also needs to be clearly specified to avoid drift between encoder and decoder implementations.

The present disclosure provides a method for coding an image of a video sequence, which is combined with a BM based DMVR process. Where initial motion information of the current image block is obtained, sample values of at least two candidate reference image blocks corresponding to the current image block are obtained according to the initial motion information, a bit-depth of sample values of each candidate reference image block is constrained to a predefined bit-depth, then refined motion information is obtained based on sample values of the at least two constrained candidate reference image blocks, and a prediction image block of the current image block is determined according to the refined motion information. Since the bit-depth of sample values of each candidate reference image block is constrained before the refining of the motion information, thus rendering the computing complexity lower and allowing for less processing time.

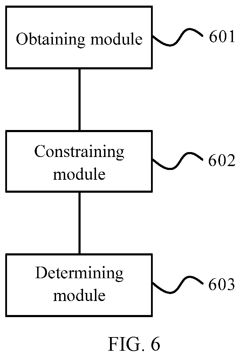

FIG. 6 is a structural view of an apparatus for coding an image of a video sequence according to an embodiment of the present disclosure. Where the image comprises a current image block, the apparatus includes: an obtaining module 601, a constraining module 602 and a determining module 603.

The obtaining module 601 is configured to obtain initial motion information of the current image block.

The obtaining module 601 is further configured to obtain sample values of at least two candidate reference image blocks corresponding to the current image block according to the initial motion information;

The constraining module 602 is configured to constrain a bit-depth of sample values of each candidate reference image block to a predefined bit-depth;

The obtaining module 601 is further configured to obtain refined motion information based on constrained sample values of the at least two constrained candidate reference image blocks; and

The determining module 603 is configured to determine a prediction image block of the current image block according to the refined motion information.

In an embodiment, the constraining module 602 is specifically configured to: perform a right shift by an amount of (b-d) on the bit-depth of sample values of each candidate reference image block, where b is the bit-depth of the sample values of the each candidate reference image block, d is the predefined bit-depth, and b is greater than d.

In an embodiment, the obtaining module 601 is specifically configured to: use a first cost function to determine motion information with the least cost from a merge candidate list as the initial motion information, where the merge candidate list includes motion information of adjacent blocks of the current image block.

In an embodiment, the obtaining module 601 is specifically configured to: determine motion information identified by a merge index from a merge candidate list as the initial motion information, where the merge candidate list includes motion information of adjacent blocks of the current image block.

In an embodiment, the obtaining module 601 is specifically configured to: determine a position of a candidate reference image block according to the initial motion information and a position of the current image block; determine whether sample values of the candidate reference image block are available based on the position of the candidate reference image block, if sample values of the candidate reference image block are unavailable, performing an interpolation operation to obtain the sample values of the candidate reference image block.

In an embodiment, the obtaining module 601 is specifically configured to: use a second cost function to determine a position of a constrained candidate reference image block with the least cost; obtain the refined motion information according to the position of the constrained candidate reference image block with the least cost.

In an embodiment, the second cost function indicates a difference between a constrained candidate reference image block and a template of the current image block, where the template is obtained based on the initial motion information and a position of the current image block and a bit-depth of sample values of the template is constrained to the predefined bit-depth.

In an embodiment, the cost is calculated as:

$$\text{cost} = \sum_{i=0}^{H-1} \sum_{j=0}^{W-1} |(I0(i,j) - MIN((1 \ll d) - 1, (I1(i,j) + (m0 - m1))))|, \text{ if } m0 > m1$$

$$\text{cost} = \sum_{i=0}^{H-1} \sum_{j=0}^{W-1} |(MIN((1 \ll d) - 1, (I0(i,j) + (m1 - m0))) - I1(i,j))|, \text{ otherwise}$$

(6)

Where $H$ is a height of the current image block, $W$ is a width of the current image block, $I0(i, j)$ is a sample value at a position (i, j) of a constrained candidate reference image block, $I1(i, j)$ is a sample value at the position (i, j) of the template, $m0$ is a mean of sample values of the constrained candidate reference image block, $m1$ is a mean of sample values of the template, d is the predefined bit-depth.

In an embodiment, the at least two constrained candidate reference image blocks comprises a set of first constrained candidate reference image blocks and a set of second constrained candidate reference image blocks; where the obtaining module 601 is specifically configured to: obtain a first initial reference image block based on the first initial motion information and a position of the current image block; obtain a second initial reference image block based on the second initial motion information and the position of the current image block; calculate a weighted combination of the first initial reference image block and the second initial reference image block as the template; calculate differences between the template and each first constrained candidate reference image block and determine a position of a first constrained reference image block with the smallest difference; calculate differences between the template and each second constrained candidate reference image block and determine a position of a second constrained reference image block with the smallest difference. Where the determining module 603 is specifically configured to: obtain the refined motion information according to the first position and the second position.

In an embodiment, the at least two constrained candidate reference image blocks comprise a set of first constrained candidate reference image blocks and a set of second constrained candidate reference image blocks, and the second cost function indicates a difference between a first constrained candidate reference image block and a second constrained candidate reference image block.

In an embodiment, the cost is calculated as:

$$\text{cost} = \sum_{i=0}^{H-1} \sum_{j=0}^{W-1} |(I0(i,j) - MIN((1 \ll d) - 1, (I1(i,j) + (m0 - m1))))|, \text{ if } m0 > m1$$

$$\text{cost} = \sum_{i=0}^{H-1} \sum_{j=0}^{W-1} |(MIN((1 \ll d) - 1, (I0(i,j) + (m1 - m0))) - I1(i,j))|, \text{ otherwise}$$

(7)

Where **H** is a height of the current image block, **W** is a width of the current image block, **I0**(i, j) is a sample value at a position (i, j) of a first constrained candidate reference image block, **I1**(i, j) is a sample value at the position (i, j) of a second constrained candidate reference image block, **m0** is a mean of sample values of the first constrained candidate reference image block, **m1** is a mean of sample values of the second constrained candidate reference image block, d is the predefined bit-depth.

In an embodiment, the initial motion information comprises a refined motion vector of the current image block; where the determining module 603 is specifically configured to: determine the prediction image block of the current image block according to the refined motion vector and a reference image, where the reference image is a predefined image or obtained based on a predefined algorithm.

In an embodiment, the initial motion information comprises a refined motion vector of the current image block and indication of a reference image; where the determining module 603 is specifically configured to: determine the prediction image block of the current image block according to the refined motion vector and the indication of the reference image.

With the apparatus for coding an image of a video sequence provided in the present disclosure, the bit-depth of sample values of each candidate reference image block is constrained before the refining of the motion information, thus rendering the computing complexity lower and allowing for less processing time.

The present disclosure also provides an apparatus for coding an image of a video sequence which includes a processor and a memory. The memory is storing instructions that cause the processor to perform the method according to the method described above.

The present disclosure also provides a computer-readable storage medium having stored thereon instructions that when executed cause one or more processors configured to code an image of a video sequence is proposed. The instructions cause the one or more processors to perform a method described above.

The present disclosure also provides an encoder including an apparatus for coding an image of a video sequence according to the above embodiments.

The present disclosure also provides an decoder including an apparatus for coding an image of a video sequence according to the above embodiments.

The present disclosure also provides a terminal device including an above-described encoder and an above-described decoder.

Terms such as "first", "second" and the like in the specification and claims of the present disclosure as well as in the above drawings are intended to distinguish different objects, but not intended to define a particular order.

The term such as "and/or" in the embodiments of the present disclosure is merely used to describe an association between associated objects, which indicates that there may be three relationships, for example, A and/or B may indicate presence of A only, of both A and B, and of B only.

The term "a" or "an" is not intended to specify one or a single element, instead, it may be used to represent a plurality of elements where appropriate.

In the embodiments of the present disclosure, expressions such as "exemplary" or "for example" are used to indicate illustration of an example or an instance. In the embodiments of the present disclosure, any embodiment or design scheme described as "exemplary" or "for example" should not be interpreted as preferred or advantageous over other embodiments or design schemes. In particular, the use of "exemplary" or "for example" is aimed at presenting related concepts in a specific manner.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for encoding and decoding, or incorporated in a combined codec. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

**Claims**

1. A method for coding an image of a video sequence, wherein the image comprises a current image block, the method comprises:

   obtaining initial motion information of the current image block (S401);
   obtaining constrained sample values of at least two candidate reference image blocks corresponding to the current image block according to the initial motion information (S402);
   wherein
   the constrained sample values are obtained by constraining a bit-depth of sample values of each candidate reference image block to a predefined bit-depth (S403);
   wherein the constraining a bit-depth of sample values of each candidate reference image block to a predefined bit-depth is performed according to the following formula:

$$L^{'} = \left( \hat{L} + \left( 1 \ll (Q - 1) \right) \right) \gg (Q + b - d)$$

   wherein, $L^{'}$ is a constrained sample value of each candidate reference image block; $\hat{L}$ is a non-normalized sample value of each candidate reference image block, $Q$ is a normalization factor of an interpolation filter; $b$ is the bit-depth of sample values of each candidate reference image block and $d$ is the predefined bit-depth; wherein, d is less than b;
   obtaining refined motion information based on constrained sample values of at least two candidate reference image blocks (S404); and
   determining a prediction image block of the current image block according to the refined motion information (S405).

2. The method according to claim 1, wherein the obtaining initial motion information of a current image block comprises: using a first cost function to determine motion information with the least cost from a merge list as the initial motion information, wherein the merge list comprises motion information of adjacent blocks of the current image block.

3. The method according to claim 1, wherein the obtaining initial motion information of a current image block comprises:

determining motion information identified by a merge index from a merge list as the initial motion information, wherein the merge list comprises motion information of adjacent blocks of the current image block.

4. The method according to any one of claims 1 to 3, wherein the obtaining sample values of at least two candidate reference image blocks corresponding to the current image block comprises:

determining a position of a candidate reference image block according to the initial motion information and a position of the current image block;
determining whether sample values of the candidate reference image block are available based on the position of the candidate reference image block, if the sample values of the candidate reference image block are unavailable, performing an interpolation operation to obtain the sample values of the candidate reference image block.

5. The method according to any one of claims 1 to 4, wherein the obtaining refined motion information based on constrained sample values of the at least two candidate reference image blocks comprises:

using a second cost function to determine a position of a candidate reference image block with the least cost;
obtaining the refined motion information according to the position of the candidate reference image block with the least cost.

6. The method according to claim 5, wherein the second cost function indicates a difference between a candidate reference image block and a template of the current image block, wherein the template is obtained based on the initial motion information and a position of the current image block and a bit-depth of sample values of the template is constrained to the predefined bit-depth.

7. The method according to claim 6, wherein the at least two candidate reference image blocks comprises a set of first candidate reference image blocks and a set of second candidate reference image blocks;
wherein the initial motion information comprises first initial motion information and second initial motion information, the method further comprises:

obtaining a first initial candidate reference image block based on the first initial motion information and a position of the current image block;
obtaining a second initial candidate reference image block based on the second initial motion information and the position of the current image block;
calculating a weighted combination of the first initial candidate reference image block and the second initial candidate reference image block as the template;
wherein the using a second cost function to determine a position of a candidate reference image block with the least cost comprises:

calculating differences between the template and each first candidate reference image block and determining a first position of a first constrained candidate reference image block with the smallest difference;
calculating differences between the template and each second candidate reference image block and determining a second position of a second constrained candidate reference image block with the smallest difference;
wherein the obtaining the refined motion information according to a position of the candidate reference image block comprises:
obtaining the refined motion information according to the first position and the second position.

8. The method according to claim 5, wherein the at least two candidate reference image blocks comprise a set of first candidate reference image blocks and a set of second candidate reference image blocks, and the second cost function indicates a difference between a first candidate reference image block and a second candidate reference image block.

9. The method according to any one of claims 1 to 8, wherein the refined motion information comprises a refined motion vector of the current image block;
wherein the determining a prediction image block of the current image block according to the refined motion information comprises:
determining the prediction image block of the current image block according to the refined motion vector and a reference image, wherein the reference image is a predefined image or obtained based on a predefined algorithm.

10. The method according to any one of claims 1 to 8, wherein the refined motion information comprises a refined motion vector of the current image block and indication of a reference image;
wherein the determining a prediction image block of the current image block according to the refined motion information comprises:
determining the prediction image block of the current image block according to the refined motion vector and the indication of the reference image.

11. The method according to claim 2, wherein the first cost function is one of a sum of absolute difference, SAD, a mean-removed sum of absolute difference, MR-SAD, or a sum of squared differences, SSD.

12. The method according to any one of claims 5 to 8, wherein the second cost function is one of a sum of absolute difference, SAD, a mean-removed sum of absolute difference, MR-SAD, or a sum of squared differences, SSD.

13. The method according to any one of claims 1 to 12, wherein the candidate reference image block refers to the candidate reference image block with constrained sample values.

14. A non-transitory computer-readable storage medium storing programming for execution by a processing circuitry, wherein the programming, when executed by the processing circuitry, configures the processing circuitry to carry out the method according to any one of claims 1 to 13.

15. A computer program product comprising a program code for performing the method according to any one of claims 1 to 13.

16. A coding device, comprising circuitry configured to perform the method according to any one of claims 1 to 13.

**Patentansprüche**

1. Verfahren zum Codieren eines Bildes einer Videosequenz, wobei das Bild einen aktuellen Bildblock umfasst, wobei das Verfahren Folgendes umfasst:

Erlangen von anfänglichen Bewegungsinformationen des aktuellen Bildblocks (S401);
Erlangen von eingeschränkten Probenwerten von mindestens zwei Kandidatenreferenzbildblöcken, die dem aktuellen Bildblock entsprechen, gemäß den anfänglichen Bewegungsinformationen (S402);
wobei die eingeschränkten Probenwerte durch Einschränken einer Bittiefe von Probenwerten jedes Kandidatenreferenzbildblocks auf eine vordefinierte Bittiefe (S403) erlangt werden;
wobei das Einschränken einer Bittiefe von Probenwerten jedes Kandidatenreferenzbildblocks auf eine vordefinierte Bittiefe gemäß der folgenden Formel durchgeführt wird:

$$L' = \left( \hat{L} + \left( 1 \ll (Q - 1) \right) \right) \gg (Q + b - d)$$

wobei, $L'$ ein eingeschränkter Probenwert jedes Kandidatenreferenzbildblocks ist; $\hat{L}$ ein nicht-normalisierter Probenwert jedes Kandidatenreferenzbildblocks ist, $Q$ ein Normalisierungsfaktor eines Interpolationsfilters ist; $b$ die Bittiefe der Probenwerte jedes Kandidatenreferenzbildblocks ist und $d$ die vordefinierte Bittiefe ist; wobei d kleiner als b ist; Erlangen von verfeinerten Bewegungsinformationen basierend auf eingeschränkten Probenwerten von mindestens zwei Kandidatenreferenzbildblöcken (S404); und
Bestimmen eines Vorhersagebildblocks des aktuellen Bildblocks gemäß den verfeinerten Bewegungsinformationen (S405).

2. Verfahren gemäß Anspruch 1, wobei das Erlangen von anfänglichen Bewegungsinformationen eines aktuellen Bildblocks Folgendes umfasst:
Verwenden einer ersten Kostenfunktion, um Bewegungsinformationen mit den geringsten Kosten aus einer Zusammenführungsliste als die anfänglichen Bewegungsinformationen zu bestimmen, wobei die Zusammenführungsliste Bewegungsinformationen von benachbarten Blöcken des aktuellen Bildblocks umfasst.

3. Verfahren gemäß Anspruch 1, wobei das Erlangen von anfänglichen Bewegungsinformationen eines aktuellen Bildblocks Folgendes umfasst:
Bestimmen von Bewegungsinformationen, die durch einen Zusammenführungsindex aus einer Zusammenführungsliste identifiziert werden, als anfängliche Bewegungsinformationen, wobei die Zusammenführungsliste Bewegungsinformationen von benachbarten Blöcken des aktuellen Bildblocks umfasst.

4. Verfahren gemäß einem der Ansprüche 1 bis 3, wobei das Erlangen von Probenwerten von mindestens zwei Kandidatenreferenzbildblöcken, die dem aktuellen Bildblock entsprechen, Folgendes umfasst:

Bestimmen einer Position eines Kandidatenreferenzbildblocks gemäß den anfänglichen Bewegungsinformationen und einer Position des aktuellen Bildblocks;
Bestimmen, ob Probenwerte des Kandidatenreferenzbildblocks basierend auf der Position des Kandidatenreferenzbildblocks verfügbar sind, wenn die Probenwerte des Kandidatenreferenzbildblocks nicht verfügbar sind, Durchführen einer Interpolationsoperation, um die Probenwerte des Kandidatenreferenzbildblocks zu erlangen.

5. Verfahren gemäß einem der Ansprüche 1 bis 4, wobei das Erlangen von verfeinerten Bewegungsinformationen basierend auf eingeschränkten Probenwerten der mindestens zwei Kandidatenreferenzbildblöcke Folgendes umfasst:

Verwenden einer zweiten Kostenfunktion, um eine Position eines Kandidatenreferenzbildblocks mit den geringsten Kosten zu bestimmen;
Erlangen der verfeinerten Bewegungsinformationen gemäß der Position des Kandidatenreferenzbildblocks mit den geringsten Kosten.

6. Verfahren gemäß Anspruch 5, wobei die zweite Kostenfunktion eine Differenz zwischen einem Kandidatenreferenzbildblock und einer Vorlage des aktuellen Bildblocks anzeigt, wobei die Vorlage basierend auf den anfänglichen Bewegungsinformationen und einer Position des aktuellen Bildblocks erlangt wird und eine Bittiefe von Probenwerten der Vorlage auf die vordefinierte Bittiefe eingeschränkt ist.

7. Verfahren gemäß Anspruch 6, wobei die mindestens zwei Kandidatenreferenzbildblöcke einen Satz von ersten Kandidatenreferenzbildblöcken und einen Satz von zweiten Kandidatenreferenzbildblöcken umfassen;
wobei die anfänglichen Bewegungsinformationen erste anfängliche Bewegungsinformationen und zweite anfängliche Bewegungsinformationen umfassen, wobei das Verfahren ferner Folgendes umfasst:

Erlangen eines ersten anfänglichen Kandidatenreferenzbildblocks basierend auf den ersten anfänglichen Bewegungsinformationen und einer Position des aktuellen Bildblocks;
Erlangen eines zweiten anfänglichen Kandidatenreferenzbildblocks basierend auf den zweiten anfänglichen Bewegungsinformationen und der Position des aktuellen Bildblocks;
Berechnen einer gewichteten Kombination des ersten anfänglichen Kandidatenreferenzbildblocks und des zweiten anfänglichen Kandidatenreferenzbildblocks als die Vorlage;
wobei das Verwenden einer zweiten Kostenfunktion, um eine Position eines Kandidatenreferenzbildblocks mit den geringsten Kosten zu bestimmen, Folgendes umfasst:

Berechnen von Differenzen zwischen der Vorlage und jedem ersten Kandidatenreferenzbildblock und Bestimmen einer ersten Position eines ersten eingeschränkten Kandidatenreferenzbildblocks mit der kleinsten Differenz;
Berechnen von Differenzen zwischen der Vorlage und jedem zweiten Kandidatenreferenzbildblock und Bestimmen einer zweiten Position eines zweiten eingeschränkten Kandidatenreferenzbildblocks mit der kleinsten Differenz;
wobei das Erlangen der verfeinerten Bewegungsinformationen gemäß einer Position des Kandidatenreferenzbildblocks Folgendes umfasst:
Erlangen der verfeinerten Bewegungsinformationen gemäß der ersten Position und der zweiten Position.

8. Verfahren gemäß Anspruch 5, wobei die mindestens zwei Kandidatenreferenzbildblöcke einen Satz von ersten Kandidatenreferenzbildblöcken und einen Satz von zweiten Kandidatenreferenzbildblöcken umfassen, und die zweite Kostenfunktion eine Differenz zwischen einem ersten Kandidatenreferenzbildblock und einem zweiten Kandidatenreferenzbildblock anzeigt.

9. Verfahren gemäß einem der Ansprüche 1 bis 8, wobei die verfeinerten Bewegungsinformationen einen verfeinerten Bewegungsvektor des aktuellen Bildblocks umfassen;

wobei das Bestimmen eines Vorhersagebildblocks des aktuellen Bildblocks gemäß den verfeinerten Bewegungsinformationen Folgendes umfasst:

Bestimmen des Vorhersagebildblocks des aktuellen Bildblocks gemäß dem verfeinerten Bewegungsvektor und einem Referenzbild, wobei das Referenzbild ein vordefiniertes Bild ist oder basierend auf einem vordefinierten Algorithmus erlangt wird.

10. Verfahren gemäß einem der Ansprüche 1 bis 8, wobei die verfeinerten Bewegungsinformationen einen verfeinerten Bewegungsvektor des aktuellen Bildblocks und die Anzeige eines Referenzbildes umfassen;

wobei das Bestimmen eines Vorhersagebildblocks des aktuellen Bildblocks gemäß den verfeinerten Bewegungsinformationen Folgendes umfasst:

Bestimmen des Vorhersagebildblocks des aktuellen Bildblocks gemäß dem verfeinerten Bewegungsvektor und der Anzeige des Referenzbildes.

11. Verfahren gemäß Anspruch 2, wobei die erste Kostenfunktion eine von einer Summe der absoluten Differenzen (sum of absolute difference, SAD), einer aus dem Mittelwert entfernten Summe der absoluten Differenzen (mean-removed sum of absolute difference, MR-SAD) oder einer Summe der quadrierten Differenzen (sum of squared differences, SSD) ist.

12. Verfahren gemäß einem der Ansprüche 5 bis 8, wobei die zweite Kostenfunktion eine von einer Summe der absoluten Differenzen, SAD, einer aus dem Mittelwert entfernten Summe der absoluten Differenzen, MR-SAD oder einer Summe der quadrierten Differenzen, SSD, ist.

13. Verfahren gemäß einem der Ansprüche 1 bis 12, wobei sich der Kandidatenreferenzbildblock auf den Kandidatenreferenzbildblock mit eingeschränkten Probenwerten bezieht.

14. Nichtflüchtiges computerlesbares Speichermedium, das eine Programmierung zum Ausführen durch einen Verarbeitungsschaltkreis speichert, wobei die Programmierung, wenn sie durch den Verarbeitungsschaltkreis ausgeführt wird, den Verarbeitungsschaltkreis dazu konfiguriert, das Verfahren gemäß einem der Ansprüche 1 bis 13 durchzuführen.

15. Computerprogrammprodukt, umfassend einen Programmcode zum Durchführen des Verfahrens gemäß einem der Ansprüche 1 bis 13.

16. Codiervorrichtung, umfassend einen Schaltkreis, der dazu konfiguriert ist, das Verfahren gemäß einem der Ansprüche 1 bis 13 durchzuführen.

**Revendications**

1. Procédé de codage d'une image d'une séquence vidéo, dans lequel l'image comprend un bloc d'image actuel, le procédé comprend :

l'obtention d'informations de mouvement initial du bloc d'image actuel (S401) ;
l'obtention de valeurs d'échantillon contraintes d'au moins deux blocs d'image de référence candidats correspondant au bloc d'image actuel en fonction des informations de mouvement initial (S402) ;
dans lequel les valeurs d'échantillon contraintes sont obtenues en contraignant une profondeur de bits de valeurs d'échantillon de chaque bloc d'image de référence candidat à une profondeur de bits prédéfinie (S403) ;
dans lequel la contrainte d'une profondeur de bits de valeurs d'échantillon de chaque bloc d'image de référence candidat à une profondeur de bits prédéfinie est effectuée en fonction de la formule suivante :

$$L' = \left( \hat{L} + \left( 1 \ll (Q - 1) \right) \right) \gg (Q + b - d)$$

dans lequel $L'$ est une valeur d'échantillon contrainte de chaque bloc d'image de référence candidat ; $\hat{L}$ est une valeur d'échantillon non normalisée de chaque bloc d'image de référence candidat, $Q$ est un facteur de normalisation d'un filtre d'interpolation ; **b** est la profondeur de bits des valeurs d'échantillon de chaque bloc d'image de référence candidat et **d** est la profondeur de bits prédéfinie ; dans lequel d est inférieur à b ;

l'obtention d'informations de mouvement affinées sur la base de valeurs d'échantillon contraintes d'au moins deux blocs d'image de référence candidats (S404) ; et

la détermination d'un bloc d'image de prédiction du bloc d'image actuel en fonction des informations de mouvement affinées (S405) .

2. Procédé selon la revendication 1, dans lequel l'obtention d'informations de mouvement initial d'un bloc d'image actuel comprend :

l'utilisation d'une première fonction de coût pour déterminer des informations de mouvement ayant le moindre coût à partir d'une liste de fusion en tant qu'informations de mouvement initial, dans lequel la liste de fusion comprend des informations de mouvement de blocs adjacents du bloc d'image actuel.

3. Procédé selon la revendication 1, dans lequel l'obtention d'informations de mouvement initial d'un bloc d'image actuel comprend :

la détermination d'informations de mouvement identifiées par un index de fusion à partir d'une liste de fusion en tant qu'informations de mouvement initial, dans lequel la liste de fusion comprend des informations de mouvement de blocs adjacents du bloc d'image actuel.

4. Procédé selon l'une quelconque des revendications 1 à 3, dans lequel l'obtention de valeurs d'échantillon d'au moins deux blocs d'image de référence candidats correspondant au bloc d'image actuel comprend :

la détermination d'une position d'un bloc d'image de référence candidat en fonction des informations de mouvement initial et d'une position du bloc d'image actuel ;

le fait de déterminer si des valeurs d'échantillon du bloc d'image de référence candidat sont disponibles sur la base de la position du bloc d'image de référence candidat, si les valeurs d'échantillon du bloc d'image de référence candidat ne sont pas disponibles, la réalisation d'une opération d'interpolation pour obtenir les valeurs d'échantillon du bloc d'image de référence candidat.

5. Procédé selon l'une quelconque des revendications 1 à 4, dans lequel l'obtention d'informations de mouvement affinées sur la base de valeurs d'échantillon contraintes des au moins deux blocs d'image de référence candidats comprend :

l'utilisation d'une seconde fonction de coût pour déterminer une position d'un bloc d'image de référence candidat ayant le moindre coût ;

l'obtention des informations de mouvement affinées en fonction de la position du bloc d'image de référence candidat ayant le moindre coût.

6. Procédé selon la revendication 5, dans lequel la seconde fonction de coût indique une différence entre un bloc d'image de référence candidat et un modèle du bloc d'image actuel, dans lequel le modèle est obtenu sur la base des informations de mouvement initial et d'une position du bloc d'image actuel et une profondeur de bits des valeurs d'échantillon du modèle est limitée à la profondeur de bits prédéfinie.

7. Procédé selon la revendication 6, dans lequel les au moins deux blocs d'images de référence candidats comprennent un ensemble de premiers blocs d'images de référence candidats et un ensemble de seconds blocs d'images de référence candidats ; dans lequel les informations de mouvement initial comprennent des premières informations de mouvement initial et des secondes informations de mouvement initial, le procédé comprend en outre :

l'obtention d'un premier bloc d'image de référence candidat initial sur la base des premières informations de mouvement initial et d'une position du bloc d'image actuel ;

l'obtention d'un second bloc d'image de référence candidat initial sur la base des secondes informations de mouvement initial et de la position du bloc d'image actuel ;

le calcul d'une combinaison pondérée du premier bloc d'image de référence candidat initial et du second bloc d'image de référence candidat initial en tant que modèle ;

dans lequel l'utilisation d'une seconde fonction de coût pour déterminer une position d'un bloc d'image de référence candidat présentant le moindre coût comprend :

le calcul des différences entre le modèle et chaque premier bloc d'image de référence candidat et la détermination d'une première position d'un premier bloc d'image de référence candidat contraint ayant la plus petite différence ;

le calcul des différences entre le modèle et chaque second bloc d'image de référence candidat et la détermination d'une seconde position d'un second bloc d'image de référence candidat contraint ayant la plus petite différence ;

dans lequel l'obtention des informations de mouvement affinées en fonction d'une position du bloc d'image de référence candidat comprend :

l'obtention des informations de mouvement affinées en fonction de la première position et de la seconde position.

8.  Procédé selon la revendication 5, dans lequel les au moins deux blocs d'images de référence candidats comprennent un ensemble de premiers blocs d'images de référence candidats et un ensemble de seconds blocs d'images de référence candidats, et la seconde fonction de coût indique une différence entre un premier bloc d'image de référence candidat et un second bloc d'image de référence candidat.

9.  Procédé selon l'une quelconque des revendications 1 à 8, dans lequel les informations de mouvement affinées comprennent un vecteur de mouvement affiné du bloc d'image actuel ;

dans lequel la détermination d'un bloc d'image de prédiction du bloc d'image actuel en fonction des informations de mouvement affinées comprend :

la détermination du bloc d'image de prédiction du bloc d'image actuel en fonction du vecteur de mouvement affiné et d'une image de référence, dans lequel l'image de référence est une image prédéfinie ou obtenue sur la base d'un algorithme prédéfini.

10. Procédé selon l'une quelconque des revendications 1 à 8, dans lequel les informations de mouvement affinées comprennent un vecteur de mouvement affiné du bloc d'image actuel et l'indication d'une image de référence ;

dans lequel la détermination d'un bloc d'image de prédiction du bloc d'image actuel en fonction des informations de mouvement affinées comprend :

la détermination du bloc d'image de prédiction du bloc d'image actuel en fonction du vecteur de mouvement affiné et de l'indication de l'image de référence.

11. Procédé selon la revendication 2, dans lequel la première fonction de coût est l'une d'une somme de différence absolue, SAD, d'une somme de différence absolue moyenne supprimée, MR-SAD, ou d'une somme de différences au carré, SSD.

12. Procédé selon l'une quelconque des revendications 5 à 8, dans lequel la seconde fonction de coût est l'une d'une somme de différence absolue, SAD, d'une somme de différence absolue moyenne supprimée, MR-SAD, ou d'une somme de différences au carré, SSD.

13. Procédé selon l'une quelconque des revendications 1 à 12, dans lequel le bloc d'image de référence candidat fait référence au bloc d'image de référence candidat avec des valeurs d'échantillon contraintes.

14. Support de stockage non transitoire lisible par ordinateur stockant une programmation destinée à être exécutée par un circuit de traitement, dans lequel la programmation, lorsqu'elle est exécutée par le circuit de traitement, configure le circuit de traitement pour mettre en œuvre le procédé selon l'une quelconque des revendications 1 à 13.

15. Produit de programme informatique comprenant un code de programme pour réaliser le procédé selon l'une quelconque des revendications 1 à 13.

16. Dispositif de codage comprenant un circuit configuré pour réaliser le procédé selon l'une quelconque des revendications 1 à 13.

Template

Current image block

Ref0      Current image

FIG. 1

Current image block

Motion trajectory

MV0

MV1

Ref0      Current image      Ref1

FIG. 2

Bi-prediction as bilateral template

FIG. 3

Obtaining initial motion information of the current image block — S401

Obtaining sample values of at least two candidate reference image blocks corresponding to the current image block according to the initial motion information — S402

Constraining a bit-depth of sample values of each candidate reference image block to a predefined bit-depth — S403

Obtaining refined motion information based on constrained sample values of the at least two constrained candidate reference image blocks — S404

Determining a prediction image block of the current image block according to the refined motion information — S405

FIG. 4

| Obtaining initial motion information of the current image block | S501 |
| --- | --- |

| Obtaining a first initial reference image block and a second initial reference image block based on the initial motion information and a position of the current image block | S502 |
| --- | --- |

| Obtaining a template for the current image block | S503 |
| --- | --- |

| Obtaining sample values of a set of first candidate reference image blocks and sample values of a set of second candidate reference image blocks corresponding to the current image block | S504 |
| --- | --- |

| Constraining a bit-depth of sample values of each first candidate reference image block to a predefined bit-depth and constraining a bit-depth of sample values of each second candidate reference image block to a predefined bit-depth | S505 |
| --- | --- |

| Using a second cost function to select a first constrained candidate reference image block with the least cost from the set of first constrained candidate reference image blocks as a first refined reference image block of the current image block | S506 |
| --- | --- |

| Using a second cost function to select a second constrained candidate reference image block with the least cost from the set of second constrained candidate reference image blocks as a second refined reference image block of the current image block | S507 |
| --- | --- |

| Determining a prediction image block of the current image block according to the refined motion information | S508 |
| --- | --- |

FIG. 5

FIG. 6

**EP 3 837 838 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017157281 A1